# EUROPÄISCHE PATENTSCHRIFT

(11) **EP 0 455 958 B1**
(45) Veröffentlichungstag und Bekanntmachung des Hinweises auf die Patenterteilung: **31.08.1994**
(21) Anmeldenummer: 91103993.1
(22) Anmeldetag: 15.03.1991
(51) Int. Cl.: A61C 19/05

(54) **Vorrichtung zur statischen Fixierung der Kieferrelation**
Device for static determination of occlusion
Dispositif pour la prise d'occlusion statique

(30) Priorität: 10.05.1990 DE 4014975
(43) Veröffentlichungstag der Anmeldung: 13.11.1991
(73) Patentinhaber: GIRRBACH-DENTAL GMBH, D-75177 Pforzheim (DE)
(72) Erfinder: Lüth, Stefan, Dr., W-8000 München 19 (DE)
(74) Vertreter: Frank, Gerhard, Dipl.-Phys.

(56) Entgegenhaltungen:
- EP-A- 0 162 991
- GB-A- 661 720
- US-A- 3 161 956
- US-A- 4 741 513
- US-E- 31 426

## Beschreibung

Die Erfindung betrifft eine Vorrichtung zur statischen Fixierung der Kieferrelation mittels eines Registrierbestecks gemäß dem Oberbegriff des Patentanspruchs 1.

Eine derartige Vorrichtung ist aus der EP-A-0 162 991 bekannt.

Zur Herstellung eines Zahnersatzes müssen vom Zahnarzt Kieferabdrücke genommen werden und diese müssen in ihrer Position sowohl hinsichtlich des Kiefergelenks als auch in ihrer Relation zueinander bestimmt werden. Zur Bestimmung der Relation zwischen Gelenk und Kiefer (Achsrelation) sind bekannte Techniken (Gesichtsbogen) verfügbar, die nicht Gegenstand der Erfindung sind.

Es muß demnach noch die räumliche Zuordnung zwischen Oberkiefer und Unterkiefer (Kieferrelation) festgelegt werden. Hierzu ist es beispielsweise aus der DE-A- 28 25 470 bekannt, ein Registrier-Besteck zu verwenden, dessen wesentliche Funktion es ist, aufgrund bestimmter vorgegebener Bewegungsabläufe zwischen Oberkiefer und Unterkiefer durch den Patienten eine Aufzeichnung zu erzeugen, aus der sich die ordnungsgemäße Kieferrelation ermitteln läßt. Hierbei wird eine Registrierplatte ("Kieferbißplatte") im Unterkiefer eingesetzt, die sozusagen als Tafel dient für den im Oberkiefer über einen Stiftträger fixierten Stützstift oder Schreibstift. Diese Stützstift-Anordnung vermag dann die interessierenden Kieferpositionen bei vorgeschriebenen Relativbewegungen zwischen Ober- und Unterkiefer aufzuzeichnen und es ergibt sich hieraus eine typische pfeilähnliche Struktur ("Symphysenbahnwinkel"), aufgrund derer die Kieferrelation bestimmbar ist. Zur Einstellung des Stützstiftes auf der Registrierplatte ist dort eine verschiebbare Klammer (Fixierplättchen) vorgesehen, die zur vorübergehenden Halterung der Spitze des Stützstiftes eine Ausnehmung hat, die ihrerseits in bestimmter Relation zu der oben genannten pfeilspitzenähnlichen Markierung angeordnet wird.

Wenn aufgrund dieser Messungen die Kieferrelation ermittelt worden ist, wird diese Position fixiert ("verschlüsselt"), indem beispielsweise mittels einer Kolbenspritze ein härtbares Material (Abformgips) zwischen Registrierplatte und Stiftträger eingebracht wird.

Dieses Verfahren ist für den Patienten sehr unbequem und für den Zahnarzt zeit- und materialaufwendig. Außerdem ist während der Härtungsdauer des Abformmaterials die Beibehaltung der Bißlage nicht mehr gewährleistet und auch nicht mehr zu kontrollieren.

Bei der gattungsbildenden Vorrichtung gemäß der EP-A-162 991 ist vorgesehen, daß der Stützstift in einem Lager der Ausrichtklammer verriegelbar ist. Die Ausrichtklammer beinhaltet hierbei einen zweiteiligen Block sowie eine Trägerplatte, wobei ein Teil des Blocks fest (stationär) auf der Trägerplatte angeordnet ist, der andere Teil über ein seitliches Gelenk mit diesem festen Teil verbunden ist.

Bei der Feststellung der Okklusion (Vertikaldistanz zwischen Oberkiefer und Unterkiefer) liegt diese Trägerplatte auf der Registrierplatte, die hier lediglich diese Funktion einer Auflage für die Ausrichtklammer hat.

Ist die Okklusion festgestellt, wird mittels einer thermoplastischen Masse und seitlichen Einkerbungen der Trägerplatte die Position der Ausrichtklammer auf der Registrierplatte definiert, so daß die gesamte Vorrichtung dann in zwei Teilen aus dem Mund des Patienten entfernt werden kann; die beiden Teile können danach beispielsweise zur Prothesenherstellung in der ermittelten Position wieder eindeutig einander zugeordnet werden (Seite 7, Zeile 10-19 der EP-A-162 991).

Diese Gestaltung der Ausrichtklammer erlaubt nur die Erfassung der Vertikalokklusion (eine Anwendung der oben im Zusammenhang mit der DE-A-28 25 470 beschriebenen "Pfeilwinkeltechnik" ist nicht möglich) und bringt für den Patienten gegenüber der genannten Veröffentlichung keine wesentliche Verbesserung, Ungenauigkeiten in der räumlichen Zuordnung der beiden Teile während der Härtungsdauer des thermoplastischen Materials können auch hier zu Ungenauigkeiten mit späteren Problemen bei der Prothetik führen.

Aufgabe der Erfindung ist es, die vorbekannte Vorrichtung so zu verbessern, daß eine schnellere und einfachere Fixierung der Kieferrelation erreichbar ist.

Diese Aufgabe wird gemäß dem kennzeichnenden Teil des Patentanspruchs 1 gelöst.

Das erfindungsgemäße ausgebildete Registrierbesteck benötigt nicht mehr die Verschlüsselung durch Abformgips oder ähnliche Materialien und ist daher vollständig in sich verriegelbar. Nachdem einmal die ordnungsgemäße Kieferrelation ermittelt wurde und die Ausrichtklammer auf der Registrierplatte dementsprechend fixiert worden ist, kann die Verriegelung zwischen Ausrichtklammer und Stützstift mit wenigen Handgriffen erfolgen.

Weitere Ausgestaltungen der Erfindung sind den Unteransprüchen entnehmbar.

Ein Ausführungsbeispiel des erfindungsgemäßen Registrierbestecks wird anhand von Zeichnungen näher erläutert, es zeigen:
- Figur 1:: Eine schematische perspektivische Darstellung des Registrierbestecks in deren Anordnung in den Kiefern eines Patienten,
- Figur 2:: eine Aufsicht auf die Registrierplatte mit einer Ausrichtklammer nach einem ersten Ausführungsbeispiel,
- Figur 3:: einen Längsschnitt in der Ebene A-A der Figur 2,
- Figur 4 u. 5: : zwei weitere Ausführungsbeispiele der Ausrichtklammer in schematischer Aufsicht, und
- Figur 6:: eine Längsschnittdarstellung des angebrachten Registrierbestecks in der Mundhöhle.

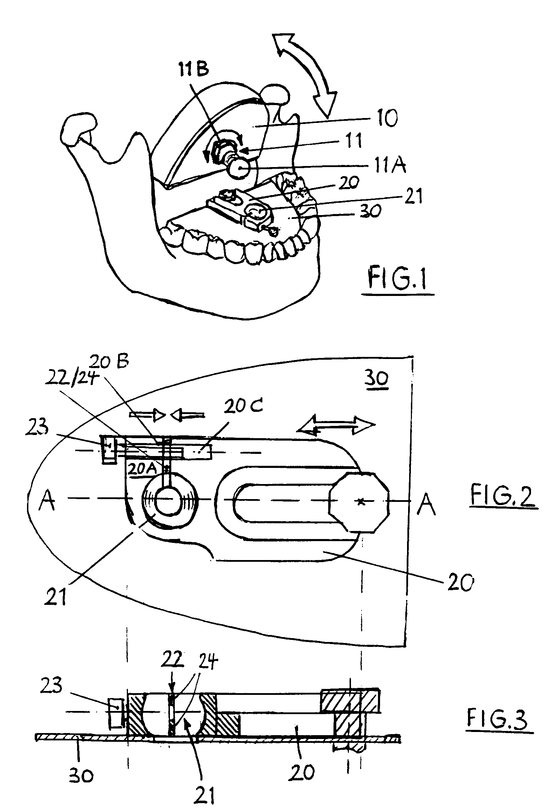

Die Figuren 1-3 sind nicht als maßstäbliche Darstellung zu verstehen, die Abmessungen von Stützstift und Ausrichtklammer sind vergrößert dargestellt.

Beim dargestellten Ausführungsbeispiel befindet sich im Oberkiefer des Patienten (gehalten an einem Abdrucklöffel 50 mittels einer Formmasse 51 (Autopolimerisat)), ein Stiftträger 10, im wesentlichen eine Metallplatte, in dem ein Stützstift oder Schreibstift 11 ein- bzw. ausschraubbar ist, so daß sich die Länge des Stützstiftes variieren und mittels einer Kontermutter 11B arretieren läßt (was für die Einstellung der Vertikaldimension erforderlich ist). Am unteren Ende des Gewindeschaftes 11C weist der Schreibstift eine Schreibkugel 11A auf, mit der in an sich bekannter Weise bestimmte Relativbewegungen zwischen Ober- und Unterkiefer auf der im Unterkiefer (gegebenenfalls an einem Abdrucklöffel 60 mittels Formmasse 61) angeordneten Registrierplatte 30 (in Abwesenheit der Ausrichtklammer 20) registriert werden, also beispielsweise die in der Einleitung erwähnte pfeilförmige Figur. In Abhängigkeit von dieser Figur und Bißbewegungen des Patienten ("Trefferfeld"), die beispielsweise auf einer Einfärbung der Registrierplatte 30 erkennbar sind, wird dann die medizinisch optimale Kieferrelation ausgewählt bzw. bestimmt und die Ausrichtklammer 20 wird relativ zur Registrierplatte 30 so fixiert, daß ihr an ihrem vorderen Ende angeordnetes Pfannenlager 21 beispielsweise über diesem "Trefferfeld" zu liegen kommt.

Der vordere Teil der Ausrichtklammer 20 (also der Teil, der zur Mundöffnung zeigt) ist beim ersten Ausführungsbeispiel (Fig. 2 und 3) über einen Winkel von etwa 90° bogenförmig und elastisch verformbar ausgebildet und geht in einen Aufnahmeblock 20A über, der durch einen Schlitz 22 von der anderen Seite der Ausrichtklammer 20 getrennt ist. Dieser Schlitz 22 erstreckt sich von der Außenseite der Ausrichtklammer 20 bis zum Pfannenlager 21 derart, daß eine Änderung der Breite dieses Schlitzes 22 eine Änderung des Eintrittsquerschnittes des Pfannenlagers 21 bewirkt. Zur Erzielung dieses Effektes ist eine Feststellschraube 23 vorgesehen, die parallel zur Symmetrieachse A-A der Schreibplatte 30 den Aufnahmeblock 20A durchgreift und in einer Gewindebohrung 20C der Ausrichtklammer 20 eingreift, die mit einer entsprechenden Durchgangsbohrung 20B im Aufnahmeblock 20A fluchtet. Durch Einschrauben der Schraube 23 verkleinert sich folglich der Schlitz 22 und dementsprechend der Eintrittsquerschnitt des Pfannenlagers 21.

Das Pfannenlager 21 (Figur 3) ist so geformt, daß in seiner Öffnungsposition sein Eintrittsquerschnitt, also der Querschnitt in der Oberfläche der Ausrichtklammer 20 geringfügig größer ist als der Maximalquerschnitt der Schreibkugel 11A (also deren Äquator-Querschnitt), so daß die Schreibkugel 11A ohne Beeinträchtigung beim Schließen der beiden Kiefer in das Pfannenlager 21 bis zu dessen Boden eintauchen kann.

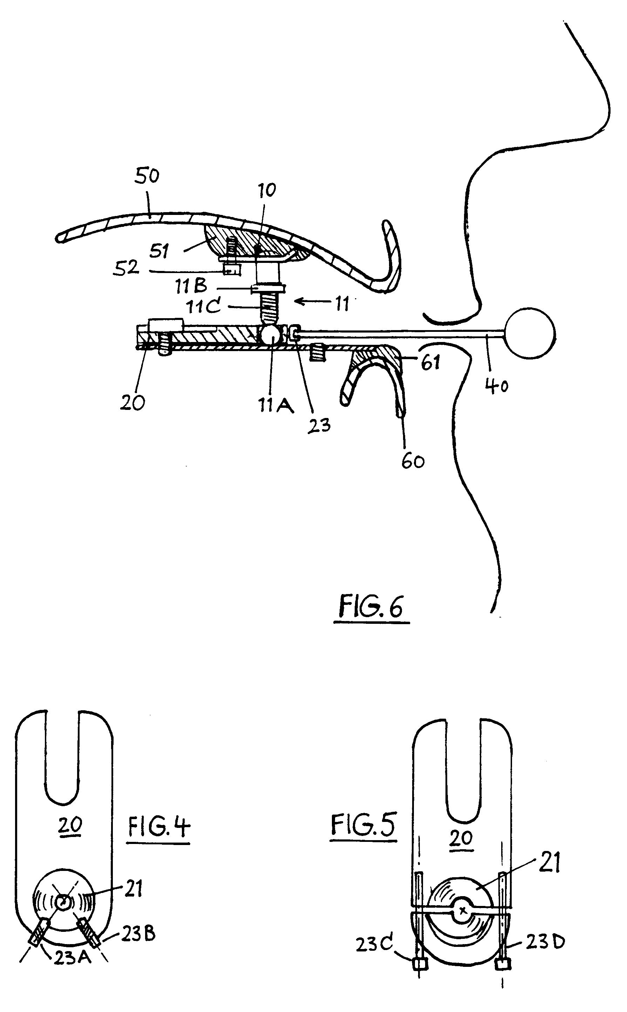

Wird danach die Feststellschraube 23 angezogen, d.h. der Schlitz 22 verringert, so verringert sich dementsprechend der Eintrittsquerschnitt des Pfannenlagers 21 und dessen oberer Rand umschließt und hintergreift dann zumindest teilweise die Rückseite der Schreibkugel 11A, so daß damit die Kieferrelation fixiert ist. Diese Verriegelung kann am einfachsten mittels eines Schlüssels 40 geschehen, der in den leicht geöffneten Mund von vorne auf den Kopf der Feststellschraube 23 aufgesetzt oder eingeschoben werden kann, wobei der Kopf der Feststellschraube 23 beispielsweise einen Innensechskant aufweisen kann und der Schlüssel 40 dementsprechend als Imbusschlüssel ausgebildet ist (Fig. 6).

Die Figuren 4 und 5 zeigen zwei weitere Ausführungsbeispiele der Ausrichtklammer 20 zur Erzielung einer zuverlässigen Arretierung der Schreibkugel im Pfannenlager 21:

Gemäß Figur 4 sind hierzu zwei Gewindestifte 23A,23B vorgesehen, die im oberen Eintrittsbereich des Pfannenlagers dessen Wandung durchsetzen und vertikal so angeordnet sind, daß sie bei eingeführter Schreibkugel diese zuverlässig hintergreifen und so das Pfannenlager "schließen".

Gemäß Fig. 5 ist die Ausrichklammer 20 zweiteilig ausgebildet, wobei die Trennlinie B-B durch den Mittelpunkt des Pfannenlagers läuft; mittels zweier beidseitig des Pfannenlagers angeordneter Feststellschrauben 23C,23D wird der Abstand der beiden Pfannenlagerhälften definiert und so das Pfannenlager "geöffnet" bzw. "geschlossen".

Die Handhabung der Teile 23A,B,C,D kann hierbei ebenfalls über einen Schlüssel 40 (Figur 6) erfolgen.

In den Zeichnungen sind die entsprechenden Bauteile nur schematisch dargestellt, der grundsätzliche Aufbau des Registrierbestecks entspricht mit Ausnahme der Schreibkugel 11A und der Ausrichtklammer 20 dem Stand der Technik und braucht daher nicht näher erläutert zu werden.

## Patentansprüche

1. Vorrichtung zur statischen Fixierung der Kieferrelation mittels eines Registrierbestecks, bestehend aus einem Stiftträger (10) mit vertikal einstellbarem Stützstift (11) zur Anbringung im Oberkiefer, mit einer Registrierplatte (30) zur Anbringung im Unterkiefer sowie mit einer Ausrichtklammer (20), wobei in der ermittelten Kieferrelation der am Stiftträger (10) vertikal arretierte Stützstift (11) in einem Pfannenlager (21) der Ausrichtklammer (20) verriegelbar ist,
dadurch gekennzeichnet, daß die Ausrichtklammer (20) auf der Registrierplatte (30) verschiebbar und dort fixierbar angeordnet ist, und daß in der Öffnungsposition des Pfannenlagers (21) der Stützstift (11) bis zum Boden eintauchen kann, so daß zur Erfassung der Kieferrelation die Ausrichtklammer (20) auf der Registrierplatte (30) und der Stützstift (11) in der Ausrichtklammer (20) derart fixierbar und verriegelbar sind, daß der Stützstift (11) in der ausgewählten Position über den die Relativbewegungen der Kiefer darstellenden Aufzeichnungen auf der Schreibplatte (30) aufsitzt.

2. Vorrichtung nach Anspruch 1, dadurch gekennzeichnet, daß der Schreibstift (11) an seinem unteren Ende kugelförmig (Schreibkugel 11A) ausgebildet ist, daß der Eintrittsquerschnitt des Pfannenlagers (21) in dessen Öffnungsposition zumindest dem maximalen Querschnitt der Schreibkugel (11A) entspricht und in der Verriegelungsposition geringfügig geringer als letzterer ist, so daß bei geöffnetem Pfannenlager (21) die Schreibkugel (11A) einführbar ist und bei geschlossenem Pfannenlager (21) dieses die Schreibkugel (11A) zumindest teilweise festhält.

3. Vorrichtung nach Anspruch 2, dadurch gekennzeichnet, daß zur Verstellung des Eintrittsquerschnitts zwischen Öffnungsposition und Verriegelungsposition des Pfannenlagers (21) ein vertikaler Schlitz (22) von der Außenseite der Ausrichtklammer (20) bis zum Pfannenlager (21) sich erstreckt, dessen Breite mittels einer Feststellschraube (23) einstellbar ist.

4. Vorrichtung nach Anspruch 3, dadurch gekennzeichnet, daß der vordere Teil der Ausrichtklammer (20) bogenförmig und elastisch verformbar ausgebildet ist und in einen Aufnahmeblock (20A) übergeht, der die eine Seite des Schlitzes (22) begrenzt, und der eine Durchgangsbohrung (20B) aufweist, die die Feststellschraube (23) etwa parallel zur Symmetrieachse (A-A) der Schreibplatte (30) durchgreift.

5. Vorrichtung nach Anspruch 3 und 4, dadurch gekennzeichnet, daß die Feststellschraube (23) in eine Gewindebohrung (20C) der Ausrichtklammer (20) eingreift, die mit der Durchgangsbohrung (20B) im Aufnahmeblock (20A) fluchtet.

6. Vorrichtung nach Anspruch 3 bis 5, dadurch gekennzeichnet, daß der Schlitz (22) mit einer elastischen Einlage (24) ausgefüllt ist.

7. Vorrichtung nach Anspruch 1 und 2, dadurch gekennzeichnet, daß zur Schließung des Pfannenlagers (21) zur Verriegelung der Schreibkugel (11A) mindestens ein Gewindestift (23A,23B) durch den Eintrittsbereich des Pfannenlagers (21) geführt ist, der die Schreibkugel (11A) hintergreift.

8. Vorrichtung nach Anspruch 2, dadurch gekennzeichnet, daß zur Schließung Pfannenlagers (21) zur Verriegelung der Schreibkugel (11A) dieses zweiteilig ausgeführt ist, derart, daß der Abstand der vom vorderen Teil der Ausrichtklammer (20) gebildeten Hälfte des Pfannenlagers (21) über zwei seitlich Pfannenlagers (21) geführten Feststellschrauben (23C,23D) einstellbar ist.

## Claims

1. Device for statically determining the relation between jaws by means of a recording instrument, comprising a pin carrier (10) with a vertically adjustable supporting pin (11) for fitting in the upper jaw, with a recording plate (30) for fitting in the lower jaw, and with an alignment clamp (20), wherein the supporting pin (11), which is vertically held in position on the pin carrier (10), is lockable in a cup bearing (21) of the alignment clamp (20) in the determined relation between the jaws, characterised in that the alignment clamp (20) is disposed on the recording plate (30) so as to be displaceable and securable there, and in that the supporting pin (11) can extend to the base when the cup bearing (21) is in its open position, so that, in order to detect the relation between the jaws, the alignment clamp (20) is securable and lockable on the recording plate (30) and the supporting pin (11) is securable and lockable in the alignment clamp (20) in such a manner that the supporting pin (11) is located in the selected position above the recordings, which represent the relative movements of the jaws, on the recording plate (30).

2. Device according to claim 1, characterised in that the recording pin (11) is spherical (recording ball 11A) at its lower end, in that the inlet cross-section of the cup bearing (21), in its open position, corresponds to at least the maximum cross-section of the recording ball (11A) and, in the locked position, is slightly smaller than the latter, so that, when the cup bearing (21) is open, the recording ball (11A) is insertable and, when the cup bearing (21) is closed, said cup bearing at least partially retains the recording ball (11A).

3. Device according to claim 2, characterised in that, for the adjustment of the inlet cross-section between the open position and the locked position of the cup bearing (21), a vertical slot (22) extends from the external surface of the alignment clamp (20) to the cup bearing (21), the width of said slot being adjustable by means of a locking screw (23).

4. Device according to claim 3, characterised in that the front portion of the alignment clamp (20) is configured to be arcuate and resiliently deformable and extends into a receiving block (20A), which defines one side of the slot (22) and has a through-bore (20B), which extends through the locking screw (23) substantially parallel to the axis of symmetry (A-A) of the recording plate (30).

5. Device according to claims 3 and 4, characterised in that the locking screw (23) engages in a threaded bore (20C) in the alignment clamp (20), which is in alignment with the through-bore (20B) in the receiving block (20A).

6. Device according to claims 3 to 5, characterised in that the slot (22) is filled with a resilient insert (24).

7. Device according to claims 1 and 2, characterised in that, for the closure of the cup bearing (21) in order to lock the recording ball (11A), at least one threaded pin (23A, 23B) extends through the inlet region of the cup bearing (21), which engages behind the recording ball (11A).

8. Device according to claim 2, characterised in that, for the closure of the cup bearing (21) in order to lock the recording ball (11A), said bearing is of a two-piece construction such that the spacing of the half of the cup bearing (21) formed by the front portion of the alignment clamp (20) is adjustable via two locking screws (23C, 23D), which extend laterally of the cup bearing (21).

## Revendications

1. Dispositif pour la prise d'occlusion statique au moyen d'un nécessaire enregistreur, composé d'un support de stylet (10) avec un stylet d'appui (11) réglable dans le sens vertical, pour la pose dans la mâchoire supérieure, d'une plaque d'enregistrement (30) pour la pose dans la mâchoire inférieure, et d'une pince de centrage (20), le stylet d'appui (11), bloqué dans le sens vertical sur le support de stylet (10), pouvant être verrouillé dans une poche-support (21) de la pince de centrage (20), dans l'occlusion déterminée, caractérisé en ce que la pince de centrage (20) est disposée avec une possibilité de déplacement et de fixation sur la plaque d'enregistrement (30), et en ce que, en position d'ouverture de la poche-support (21), le stylet d'appui (11) peut plonger jusqu'au fond, si bien que, pour déterminer l'occlusion, la pince de centrage (20) et le stylet d'appui (11) peuvent être fixés et verrouillés, respectivement, sur la plaque d'enregistrement (30) et dans la pince de centrage (20), de sorte que le stylet d'appui (11) repose sur la plaque d'enregistrement (30), dans la position choisie pour les enregistrements représentant les mouvements relatifs des mâchoires.

2. Dispositif suivant la revendication 1, caractérisé en ce que le stylet inscripteur (11) est réalisé en forme de bille (bille enregistreuse 11A) sur son extrémité inférieure, et en ce que la section d'entrée de la poche-support (21), en position d'ouverture de cette dernière, correspond à la section maximale, du moins, de la bille enregistreuse (11A), et est légèrement inférieure à cette dernière en position de verrouillage, de sorte que la bille enregistreuse (11A) peut être introduite en position d'ouverture de la poche-support (21), et que la poche (21), en position de fermeture, maintient la bille enregistreuse (11A), en partie du moins.

3. Dispositif suivant la revendication 2, caractérisé en ce qu'une fente verticale (22), dont la largeur est réglable par une vis d'arrêt (23), s'étend du côté externe de la pince de centrage (20) jusqu'à la poche-support (21), pour régler la section d'entrée entre la position d'ouverture et la position de verrouillage de la poche (21).

4. Dispositif suivant la revendication 3, caractérisé en ce que la section avant de la pince de centrage (20) est réalisée en forme d'arc, avec une possibilité de déformation élastique, et se prolonge par un bloc de réception (20A), qui délimite l'un des côtés de la fente (22) et présente un trou de passage (20B), au travers duquel s'engage la vis d'arrêt (23), à peu près à la parallèle de l'axe de symétrie (A - A) de la plaque d'enregistrement (30).

5. Dispositif suivant les revendications 3 et 4, caractérisé en ce que la vis d'arrêt (23) s'engage dans un taraudage (20C) de la pince de centrage (20), aligné sur le trou de passage (20B) du bloc de réception (20A).

6. Dispositif suivant les revendications 3 à 5, caractérisé en ce que la fente (22) est garnie d'un insert élastique (24).

7. Dispositif suivant les revendications 1 et 2, caractérisé en ce que, pour fermer la poche-support (21) en vue du verrouillage de la bille enregistreuse (11A), une vis sans tête (23A, 23B), au moins, est guidée au travers de la zone d'entrée de la poche (21), enserrant la bille enregistreuse (11A).

8. Dispositif suivant la revendication 2, caractérisé en ce que, pour fermer la poche-support (21) en vue du verrouillage de la bille enregistreuse (11A), cette poche est réalisée en deux parties, de sorte que l'écartement de la moitié de la poche-support (21), formée par la section avant de la pince de centrage (20), peut être réglé par deux vis d'arrêt (23C, 23D), guidées sur les côtés de la poche-support (21).
